# FASCICULE DE BREVET EUROPEEN

(11) **EP 3 117 149 B1**
(45) Date de publication et mention de la délivrance du brevet: **29.01.2025**
(21) Numéro de dépôt: 15714591.3
(22) Date de dépôt: 09.03.2015
(51) Int. Cl.: C03C 3/083, C03C 3/085, C03C 3/087, C03C 3/097, F24C 7/08, C03C 10/00, F24C 15/10

(54) **PLAN DE TRAVAIL EN VITROCÉRAMIQUE DE GRANDE TAILLE**
GROSSE ARBEITSPLATTE AUS GLASKERAMIK
GLASS-CERAMIC WORKTOP OF LARGE SIZE

(30) Priorité: 10.03.2014 FR 1451941
(43) Date de publication de la demande: 18.01.2017
(73) Titulaire: Eurokera S.N.C., 02400 Château-Thierry (FR)
(72) Inventeur: CHARPENTIER, Bertrand, F-02400 Chateau-Thierry (FR); FERNANDEZ, Javier, 75003 Paris (FR); LISMONDE, Michel, F-02400 Brasles (FR); RAVEL, Michael, F-02850 Barzy sur Marne (FR); ROUX, Nicolas, F-02400 Chateau-Thierry (FR); VILATO, Pablo, F-75014 Paris (FR)
(74) Mandataire: Saint-Gobain Recherche
(86) Numéro de dépôt international: PCT/FR2015/050580
(87) Numéro de publication internationale: WO 2015/136204

(56) Documents cités:
- EP-A1- 2 217 036
- WO-A1-2012/001300
- WO-A1-2012/059664
- WO-A1-2012/059664
- WO-A1-2013/150014
- WO-A1-99/06334
- WO-A1-99/06334
- FR-A1- 2 864 071
- FR-A1- 2 864 071
- FR-A1- 2 946 041
- FR-A1- 2 955 574
- US-A1- 2012 263 957

## Description

La présente invention concerne un plan de travail, ou table de travail ou comptoir ou meuble, formé d'au moins une plaque de grandes dimensions positionnée ou destinée à être positionnée horizontalement sur un ou des éléments supports (caisson d'un meuble, pied(s) support(s)) afin d'offrir une surface stable destinée à différents usages. En particulier, la présente invention concerne une table ou un meuble présentant une surface ou plateau apte à permettre en simultané ou successivement différentes activités et/ou support d'objets, en particulier pouvant permettre la cuisson ou le réchauffage d'aliments dans des récipients appropriés et offrir d'autres usages.

Les matériaux habituellement utilisés pour réaliser des plans de travail sont par exemple le bois, le quartz, le Corian^{®}, etc. Pour la cuisson d'aliments, il existe par ailleurs des surfaces de cuisson de grandes dimensions dans les cuisines, en particulier à usage professionnel, ces plaques étant généralement métalliques et/ou composites. En particulier, il existe des panneaux multicouches, à base de couches ou matériaux céramiques tels que le grès, de couches ou matériaux métalliques de type aluminium et de couches ou matériaux plastiques isolants de type Bakélite, ces panneaux présentant généralement une épaisseur importante (de l'ordre de 12 mm par exemple) et étant de réalisation complexe.

Parallèlement, des plans de cuisson en matériaux de type vitrocéramique ou verre renforcé, de dimensions plus limitées (en particulier de surface généralement inférieure à 0.4 m², des plaques de surface supérieure pouvant être plus difficiles à obtenir par les procédés habituellement utilisés, et pouvant poser des problèmes en terme de planéité, manutention, etc), existent, pour des usages en particulier domestiques, l'utilisation de matériau vitrocéramique s'étant généralisé ces dernières années pour les plaques de cuisson, en raison notamment des performances de ce matériau pour cet usage et de l'aspect attractif des plaques réalisées.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants. Les plaques ainsi conçues sont destinées exclusivement à l'usage en tant que plaques de cuisson et ne sont traditionnellement pas destinées à recevoir d'autres objets que les ustensiles résistants à la chaleur utilisés pour la cuisson d'aliments, ni destinées à l'exercice d'autres activités que la cuisson d'aliments.

Les documents de l'état de l'art EP2217036A1, FR2955574A1 et US2012263957A1 sont pertinents par rapport à l'invention définie ci-après.

La présente invention a cherché à élargir la gamme des produits d'équipement ménagers existants, à usage domestique ou professionnel, en mettant au point un nouveau type de produits interactifs permettant des usages plus variés.

Ce but a été atteint par le nouvel équipement ou article ou installation selon l'invention, avantageusement interactif, cet équipement mobilier/ménager comprenant :
- au moins un plan (ou comptoir ou table) de travail formé d'au moins un substrat (en particulier plaque ou surface ou plateau) en (ou (à base) d'un ou essentiellement constituée d'un) matériau verrier monolithique (ou monobloc ou d'un seul tenant), avantageusement essentiellement plan, de surface (longueur par largeur de sa face de plus grandes dimensions) supérieure à 0.7 m² , ledit substrat présentant une luminosité L* inférieure à 10, un flou inférieur à 30 %, et une transmission lumineuse T_{L} inférieure à 10%,
- au moins un élément de chauffage (en particulier sous le substrat et caché par celui-ci lorsque cet élément de chauffage n'est pas en fonctionnement/est au repos),
- au moins une source lumineuse, destinée à matérialiser (rendre visible) une ou des zones (telles que les zones de chauffe) ou un ou des éléments ou affichages (par exemple un indicateur d'état de marche ou un indicateur de puissance) du substrat, notamment par transmission lumineuse au travers du substrat, cette source se trouvant sous le substrat et étant cachée par celui-ci lorsque cette source n'est pas en fonctionnement/est au repos,
- au moins une interface de communication avec au moins un élément du plan (par exemple avec la ou les sources lumineuses et/ou le ou les éléments de chauffage).

Le produit mis au point selon l'invention répond au but recherché, la présente invention proposant ainsi un équipement nouveau interactif (permettant notamment l'activation de fonctions telles que la cuisson d'aliments, et l'affichage de zones ou données) pouvant tout aussi bien être utilisé en cuisine que dans une autre pièce à vivre, le plan de travail pouvant faire partie d'un meuble plein ou non, d'une table, d'un comptoir, etc, ce plan de travail étant monté ou apte à être monté horizontalement sur (en particulier au sommet de) un ou des éléments supports (caisson d'un meuble, pied(s) support(s)) afin d'offrir une surface stable destinée à différents usages, le plan de travail ou l'équipement selon l'invention présentant une surface supérieure continue apte à permettre en simultané ou successivement des activités (telles que travail, jeux, lecture, etc.), le support d'objets (tels que papiers, ordinateurs, vases, vaisselle, etc.), et la préparation ou la cuisson ou le réchauffage d'aliments dans des récipients appropriés.

Comme indiqué précédemment, le plan de travail est formé d'un substrat ou plaque en matériau verrier monolithique (le matériau verrier ayant été formé d'un seul bloc/en une seule pièce, même si le substrat peut le cas échéant présenter des évidements, généralement pratiqués dans la pièce déjà formée, à des fins esthétiques ou fonctionnelles) de grandes dimensions, l'avantage d'une telle plaque monolithique de grandes dimensions étant notamment d'offrir une surface majoritairement continue/uniforme/sans raccords, esthétique et d'entretien facile, ainsi qu'un plus grand confort d'utilisation et une plus grande sécurité (en matière d'étanchéité en cas de renversement de liquide, etc. ), etc. Le substrat consiste essentiellement, voire uniquement, en le matériau verrier, ce substrat/matériau verrier pouvant le cas échant être muni de revêtements de décoration ou fonctionnels de faible épaisseur (notamment de l'ordre de quelques dizaines de nanomètres à quelques centaines de microns, voire plus), par exemple en émail, peinture, couches minces, etc, comme précisé ultérieurement.

Contrairement à l'usage dans les vitrocéramiques notamment, ce (substrat en) matériau verrier est de grandes dimensions, sa surface (correspondant au produit de sa longueur par sa largeur pour sa face de plus grandes dimensions - généralement sa face supérieure, destinée à être apparente et à servir de support d'articles (ménagers ou de travail ou de cuisson) étant de dimensions supérieures à 0.7 m², de préférence supérieures à 0.9 m², notamment supérieures à 1 m², en particulier supérieures ou égales à 2 m². Or la fabrication de grandes plaques, dans le cas de la vitrocéramique notamment, pose de nombreux problèmes en matière de planéité et de manipulation. Une plaque de grandes dimensions, présentant pourtant une bonne planéité, peut néanmoins être avantageusement obtenue en réduisant la vitesse de passage (ou rallongeant l'arche de céramisation ou augmentant le temps de séjour dans l'arche) par rapport à la vitesse (ou à la longueur de l'arche ou au temps standards) habituellement utilisée pour obtenir des plaques vitrocéramiques de dimensions usuelles inférieures à 0.4 m², comme explicité ultérieurement dans le procédé décrit.

Le substrat/matériau verrier selon l'invention est avantageusement plan (ou majoritairement ou quasiment plan), et présente en particulier une planéité (hauteur entre le point le plus haut et le point le plus bas du substrat par rapport au plan moyen du substrat, à l'exception des déformations volontaires éventuelles opérées sur le substrat à des fins esthétiques ou fonctionnelles) inférieure à 0,1% de la diagonale du substrat, et de préférence inférieure à 3 mm, notamment inférieure à 2 mm, en particulier inférieure à 1 mm, voire de l'ordre de zéro, en fonction de la taille/surface/diagonale du substrat, la planéité étant mesurée à l'aide d'un ondulomètre de référence SurFlat commercialisé par la société Visuol. Le substrat est généralement de forme géométrique, en particulier rectangulaire, voire carrée, voire circulaire ou ovale, etc., et présente généralement une face "supérieure" (face visible) en position d'utilisation, une autre face "inférieure" (généralement cachée, dans le châssis ou caisson du meuble incorporant le plan de travail) en position d'utilisation, et une tranche (ou chant ou épaisseur). La face supérieure est généralement plane et lisse mais peut aussi présenter au moins une zone en relief et/ou au moins une zone en creux et/ou au moins une ouverture et/ou des bords biseautés (ces formes ayant été ajoutées lors de la fabrication du substrat, par exemple par laminage ou effondrement ou pressage, etc., ou ayant été ajoutées en reprise), etc, ces variations de forme constituant avantageusement des variations continues de la plaque (sans changement de matériaux ou raccords). La face inférieure peut être notamment lisse ou munie de picots augmentant sa résistance mécanique et obtenus par exemple par laminage.

L'épaisseur du substrat en matériau verrier monolithique est généralement d'au moins 2 mm, notamment d'au moins 2.5 mm, en particulier est de l'ordre de 3 à 30 mm, et avantageusement est inférieure à 15 mm, en particulier est de l'ordre de 3 à 15 mm, notamment de 3 à 10 mm.

Le matériau verrier du substrat utilisé est avantageusement résistant à haute température et/ou présente un coefficient de dilatation nul ou quasi-nul (par exemple inférieur à 15.10⁻⁷ K⁻¹), en particulier est avantageusement de la vitrocéramique ou un verre renforcé (notamment trempé chimiquement ou thermiquement). De préférence, le substrat est un substrat en vitrocéramique. Comme défini selon l'invention, le substrat/matériau verrier est avantageusement faiblement transmissif, peu diffusant et de couleur sombre (définie par la luminosité L*), en particulier de couleur noire ou brun foncé, ce matériau permettant en particulier un affichage par transmission lumineuse au travers du substrat, comme précisé ci-après.

La vitrocéramique utilisée peut être notamment de composition telle que décrite dans les demandes de brevets publiées sous les numéros suivants : WO2012156444, WO2012001300, DE202012011811, cette vitrocéramique étant en particulier une vitrocéramique d'aluminosilicate de lithium.

On utilise par exemple avantageusement une vitrocéramique comprenant les constituants suivants et/ou obtenue par céramisation à partir d'un verre de composition suivante, dans les limites ci-après exprimées en pourcentages pondéraux : SiO₂: 52 - 75 %; Al₂O₃ :18 - 27 %; Li₂O: 2,5 - 5,5 %; K₂O : 0 - 3 %; Na₂O : 0 - 3 %; :ZnO : 0 - 3,5 %; MgO : 0 - 3 %; CaO: 0 - 2,5%; BaO : 0 - 3,5 %; SrO : 0 - 2 %; TiO₂ :1,2 - 5,5 %; ZrO₂ : 0 - 3 %; P₂O₅: 0 - 8 %, et de préférence, dans les limites ci-après exprimées en pourcentages pondéraux : SiO₂ : 64 - 70 %; Al₂O₃ : 18 - 21 %; Li₂O : 2,5 - 3,9 %; K₂O : 0 - 1,0 %; Na₂O : 0 - 1,0 %; ZnO : 1,2 - 2,8 %; MgO : 0,20 - 1,5 %; CaO : 0 - 1%; BaO: 0 - 3 %; SrO: 0 - 1,4 %; TiO₂ : 1,8 - 3,2 %; ZrO₂ : 1,0 - 2,5 %.

La vitrocéramique peut être affinée à l'arsenic (c'est-à-dire de (verre mère de) composition comprenant de l'ordre de 0.5 % à 1.5% en poids d'oxyde d'arsenic (exprimé en As₂O₃), ou peut être non affinée à l'arsenic (en particulier présentant un taux d'oxydes d'arsenic inférieur à 0.2 %, en particulier inférieur à 0.1%, voire nul)/ affinée à l'étain.

Le matériau verrier peut être également un verre trempé non céramisé, par exemple un aluminosilicate de lithium trempé tel que décrit dans les demandes de brevets publiées sous les numéros suivants : FR1060677, WO2012080672, ou dans la demande déposée en France sous le numéro 1363157, ou encore un verre trempé d'un autre type (sodo-calcique, borosilicate, etc), par exemple tel que décrit dans la demande publiée sous le numéro WO2012146860.

La vitrocéramique ou le verre trempé sont obtenus par les procédés respectifs décrits dans les documents précités en utilisant les cycles et températures de traitement permettant d'obtenir le matériau verrier présentant les caractéristiques sélectionnées données dans la définition de l'invention. Dans le cas des vitrocéramiques, ces procédés sont de préférence modifiés en réduisant la vitesse de passage d'au moins 25%, de préférence d'au moins 50%, ou en augmentant la longueur de l'arche de céramisation ou le temps de séjour dans ladite arche d'au moins 25%, de préférence d'au moins 50%, par rapport respectivement aux vitesses, longueurs et temps normalement utilisés, afin d'obtenir un substrat plan de grandes dimensions comme requis selon l'invention, comme explicité ultérieurement.

Comme défini selon l'invention, le substrat formant le plan de travail est sélectionné de façon à présenter une luminosité L* inférieure à 10, de préférence inférieure à 5, en particulier inférieure à 4, voire inférieure à 2, un flou inférieur à 30 %, en particulier inférieur à 28%, et une transmission lumineuse T_{L} inférieure à 10%, notamment inférieure ou égale à 5%, en particulier de 0,8% à 5%, cette transmission lumineuse étant préférentiellement non nulle (supérieure à 0%). Le substrat présente ces caractéristiques sur l'essentiel (en particulier sur au moins 80%, voire sur 100%) de sa surface, exception faite d'éventuels décors localisés (par exemple en émail) ou composants localisés appliqués à sa surface. Ces propriétés sont généralement celles du matériau verrier formant le substrat en lui-même, sans la présence d'un quelconque revêtement, mais le cas échéant peuvent résulter de la combinaison du matériau verrier et d'un revêtement appliqué sur l'essentiel de l'une et/ou l'autre de ses faces principales. Avantageusement, il s'agit des caractéristiques intrinsèques du substrat en matériau verrier, c'est-à-dire que ledit substrat en matériau verrier présente ces caractéristiques en lui-même sans la présence d'un quelconque revêtement.

La luminosité L* est une composante définie dans le système colorimétrique CIE et est évaluée de façon connue, à l'aide notamment d'un colorimètre Byk-Gardner Color Guide 45/0 (colorimétrie en réflexion) sur la face supérieure du substrat posé sur fond blanc opaque.

Le flou mesure le niveau de diffusion lumineuse et est défini, dans le cadre de l'invention, comme étant le rapport de la transmission diffuse sur la transmission totale à une longueur d'onde égale à 550 nm, ce flou étant évalué par exemple à l'aide du spectrophotomètre muni d'une sphère intégrante utilisé pour les mesures de transmission lumineuse.

La transmission lumineuse T_{L} est mesurée selon la norme ISO 9050 :2003 en utilisant l'illuminant D65, et est la transmission totale (intégrée dans le domaine du visible), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4 mm selon la norme ISO 9050 :2003.

Le substrat selon l'invention tel que défini ci-avant est en particulier d'aspect sombre, et est formé d'un matériau faiblement transmissif et peu diffusant, notamment est d'aspect noir ou brun, permettant notamment, en combinaison avec des sources lumineuses placées dessous, d'afficher des zones lumineuses permettant de signaler les zones de cuisson lorsqu'elles sont en état de marche, tout en masquant les éléments sous-jacents, en particulier au repos. Le matériau verrier utilisé présente également un indicateur (ou facteur ou coefficient) d'opacité Ω inférieur à 100, et avantageusement supérieur à 93, afin notamment de permettre ledit affichage par des sources sous-jacentes dans un mode de réalisation de l'invention ou un affichage par projection comme indiqué ultérieurement, cet indicateur d'opacité dans la présente invention étant déterminé par la formule Ω = 100 - ΔE* et étant évalué en mesurant (colorimétrie en réflexion effectuée à l'aide d'un colorimètre Byk-Gardner Color Guide 45/0) la variation de couleur ΔE*, correspondant à la différence entre la couleur, mesurée en réflexion sur la face supérieure du substrat, pour le substrat posé sur fond noir opaque et celle pour le substrat posé sur fond blanc opaque (ΔE* = ((L_{N}*-L_{B}*)² + (a_{N}*-a_{B}*)² + (b_{N}*-b_{B}*)²)^{½}, L_{B}*,a_{B}*,b_{B}* étant les coordonnées colorimétriques de la première mesure sur fond blanc et L_{N}*,a_{N}*,b_{N}* étant celles de la seconde mesure sur fond noir dans le système colorimétrique établi en 1976 par la CIE).

Le substrat est de préférence à base d'une vitrocéramique noire comprenant généralement des cristaux de structure β-quartz au sein d'une phase vitreuse résiduelle, la valeur absolue de son coefficient de dilatation étant avantageusement inférieure ou égale à 15.10⁻⁷/°C, voire à 5.10⁻⁷/°C, et présentant les caractéristiques précédemment mentionnées, telle que la vitrocéramique des plaques commercialisées sous le nom Kerablack+ par la société Eurokera. En particulier, il peut s'agir d'une vitrocéramique affinée à l'arsenic de composition telle que décrite dans la demande de brevet EP0437228 ou US5070045 ou FR2657079, ou d'une vitrocéramique affinée à l'étain, présentant un taux d'oxydes d'arsenic inférieur à 0.2 % (voire inférieur à 0.1%, voire inférieur ou égal à 500 ppm, voire nul), par exemple de composition telle que décrite dans la demande de brevet WO 2012/156444.

Le cas échéant, le substrat peut également comprendre des colorants, donnant par exemple certaines nuances ou teintes, à des taux de préférence inférieurs à 10% en poids, par exemple de l'oxyde de vanadium, de l'oxyde de fer, de l'oxyde de cobalt, de l'oxyde de cérium, de l'oxyde de sélénium, de l'oxyde de chrome, voire de l'oxyde de nickel, de l'oxyde de cuivre et/ou de l'oxyde de manganèse, etc..

Comme défini précédemment, l'article selon l'invention comprend également au moins un élément de chauffage (ou élément chauffant), par exemple un ou des foyers radiants ou halogènes ou un ou plusieurs brûleurs à gaz et/ou un ou plusieurs moyens de chauffage par induction, ces moyens de chauffage étant généralement situés sous le plan de travail et cachés par celui-ci au repos. Le plan de travail de l'article selon l'invention peut comporter un ou plusieurs éléments de chauffage, de même qu'un ou plusieurs feux. Par le terme « feu », on entend un emplacement de cuisson. L'article selon l'invention peut comporter plusieurs types d'éléments de chauffage ou feux (feux à gaz, feux radiants, halogènes ou à induction). De préférence, l'article selon l'invention comprend comme élément(s) de chauffage un ou plusieurs moyens de chauffage par induction.

Le ou les moyens de chauffage peuvent être localisés dans une zone définie (par exemple sur une extrémité du substrat) ou plusieurs zones du substrat, ou peuvent être uniformément répartis sous le substrat, occupant par exemple au moins 25% de la surface du substrat, voire peuvent occuper une surface quasi-équivalente à celle du substrat (par exemple plus de 50 %, notamment plus de 75%, voire plus de 85%, voire 100% de la surface principale du substrat), une pluralité d'inducteurs de petites dimensions tapissant par exemple le substrat sous sa face inférieure, pour permettre un chauffage au besoin dans n'importe quelle zone.

Les emplacements de cuisson sur le plan de travail, à l'aplomb des moyens de chauffage, peuvent être signalés (ou non, dans le cas par exemple d'un plan muni de moyens de chauffage couvrant l'ensemble de sa superficie), sur activation et/ou en permanence, notamment au moyen respectivement d'une ou plusieurs sources lumineuses et/ou au moyen d'une décoration fixe, par exemple en émail. Les dimensions des motifs permettant de signaler les zones de cuisson (de même que celles de motifs pouvant signaler d'autres zones ou fonctions) peuvent être plus ou moins importantes, par exemple il peut s'agir de cercles délimitant chacun des éléments de chauffage, ou de petits motifs (triangles, croix, etc.) en leur centre ou à leur base, etc.

De préférence, les emplacements de cuisson (et/ou le cas échéant d'autres zones et/ou éléments et/ou fonctions et/ou décorations) sont signalés par au moins une source lumineuse telle qu'évoquée dans la définition de l'invention, cette source une fois activée indiquant par exemple l'emplacement à l'aide d'un motif lumineux (notamment de type disque, cercle, croix, triangle, etc.) de couleur et/ou de dimensions fixes ou variables. Alternativement, ils peuvent être indiqués en permanence, par un motif (notamment de type rond cercle, croix, triangle, etc.) fixe, obtenu notamment par dépôt de couche(s) (en particulier telle(s) que celle(s) utilisée(s) pour la décoration de vitrocéramiques), par exemple en émail, à la surface de la plaque (notamment en face supérieure).

Selon l'invention, le ou les emplacements de cuisson (et/ou le cas échéant d'autres zones et/ou éléments et/ou fonctions et/ou décorations) sont signalés par, et/ou mis en évidence à l'aide de ou au moyen de, au moins une source lumineuse telle qu'évoquée dans la définition de l'invention, sur activation de ladite source, ladite source étant placée sous le substrat (en position d'utilisation) et étant cachée par celui-ci au repos, ladite source permettant un affichage lumineux par transmission au travers du substrat/plan de travail.

Dans un autre mode de réalisation avantageux, la face, en particulier supérieure (en position d'utilisation) ou apparente, de la plaque est revêtue d'un revêtement opacifiant, en particulier d'un émail ou de couches minces, le taux de couverture dudit revêtement opacifiant dans la zone revêtue étant d'au moins 5%, de préférence d'au moins 20%, en particulier d'au moins 45%, voire de 100%, l'émail présentant le cas échéant (notamment lorsque le taux de couverture est inférieur à 100%) un taux de pigments supérieur à 2% (par rapport au taux de fritte + pigment(s) dans l'émail), en particulier supérieur à 5%, de préférence supérieur à 10%, notamment compris entre 5 et 30%, et/ou présentant un indice de réfraction différent de celui du substrat.

Une ou des sources lumineuses peuvent également permettre l'affichage d'autres éléments ou fonctions, par exemple l'affichage de moyens ou zones de commande (sous forme de touches, logos, voire claviers, etc.) ou d'indicateurs (d'intensités/de puissance, de temps, etc.), activables par exemple par contact sur la surface du plan (à l'aide par exemple de capteurs situés sous la surface) ou à distance (notamment par communication sans fil), voire par simple mouvement de la main (par capteurs situés le cas échéant à l'extérieur et enregistrant le mouvement, par exemple par triangulation, pour le convertir, à l'aide notamment d'un algorithme et d'une interface adaptés, en l'activation d'une fonction par exemple), ou le cas échéant par la pose d'un objet déterminé (casserole, etc.) à un emplacement déterminé (telle qu'une zone de cuisson) de la plaque. La ou les sources lumineuses peuvent également permettre l'affichage de décors, ou de données diverses (affichage par exemple de pages d'ordinateurs, de recettes de cuisine, etc.) téléchargées par exemple par communication sans fil en utilisant une interface appropriée et transmises à partir des sources lumineuses à la surface de la plaque.

Le cas échéant, l'article selon l'invention peut comprendre plusieurs sources lumineuses, pour l'éclairage de plusieurs zones ou pour l'affichage de textes ou décors complexes, ou pour homogénéiser l'éclairage, ces sources pouvant être disposées suivant des axes et des angles d'éclairage différents pour obtenir l'effet voulu, sans reflets ou ombrages indésirables. Selon un mode de réalisation ne faisant pas partie de l'invention, dans le cas d'un éclairage par projection sur le plan formant écran, plusieurs sources sont par exemple disposées de façon que l'angle entre chaque source (ou entre chaque élément, par exemple miroir, envoyant la lumière vers le plan de travail) et la normale au plan de travail soit compris entre 5 et 60°, de préférence entre 30 et 45° pour minimiser les effets d'ombres projetées par une personne opérant sur le plan de travail.

La ou les sources lumineuses peuvent être avantageusement formées par des diodes électroluminescentes pour des raisons notamment d'encombrement, d'efficacité, de pérennité et de résistance aux conditions environnantes (chaleur...).

Ces diodes sont avantageusement de type puce(s) semi conductrice(s), en matériaux minéraux (DEL ou LED en anglais), émettant notamment dans une direction, et peuvent être encapsulées, c'est-à-dire comprendre un composant semi-conducteur et une enveloppe (par exemple en résine type époxy ou nylon), encapsulant le composant semi-conducteur. Ces diodes peuvent aussi être des puces semi-conductrices sans lentilles de collimation par exemple de taille de l'ordre de la centaine de µm ou du mm, éventuellement avec une encapsulation minime (par exemple de protection).

Les diodes peuvent le cas échéant être portées par un support ou barrette ou embase, cette embase pouvant présenter une surface (plane ou inclinée) traitée et/ou rendue réfléchissante pour une meilleure efficacité lumineuse, par exemple revêtue d'une laque ou peinture et/ou couche miroir, et/ou couplée à un réflecteur blanc ou métallique pour mieux diriger le rayonnement émis.

Le cas échéant, on peut également utiliser des diodes électroluminescentes organiques (OLED), consistant notamment en une superposition de couches semi-conductrices organiques entre des électrodes, et produisant différentes couleurs au pixel près suivant le cheminement de l'électricité à travers les couches organiques. D'autres types de sources lumineuses peuvent également être utilisées, conjointement ou alternativement aux diodes précitées, par exemple lampes halogènes ou à incandescence, lasers ou écrans à cristaux liquides, les sources pouvant le cas échéant être utilisées en combinaison avec des lentilles ou miroirs, etc.

L'assemblage de chaque source ou des sources (à la plaque ou à une autre partie de l'équipement ou à une partie extérieure (associée audit équipement ) peut se faire par soudure, clipsage, collage, etc, le cas échéant par l'intermédiaire d'un autre élément ; par exemple, on peut monter des diodes, soudées sur un support lui même logé au fond d'un profilé métallique, par clipsage ou collage du profilé. Le positionnement de la ou des sources (par rapport à la plaque notamment) est adapté pour permettre un affichage au travers du substrat**.**

Les sources, ainsi que leur alimentation et actionnement, peuvent être dissocié(e)s ou non de façon à permettre un éclairage simultané ou individuel des zones d'éclairage voulues, selon les besoins. Chaque source peut être monochromatique (couleur pure) ou polychromatique (couleur de synthèse).

Par « source lumineuse monochromatique » on entend une source lumineuse présentant un seul pic d'émission dans la gamme des longueurs d'onde visibles et tel que la largeur du pic varie de 1 à 100 nm, préférentiellement de 5 à 50 nm.

Par « source lumineuse polychromatique » on entend une source lumineuse qui présente au moins deux pics d'émission à des longueurs d'onde différentes dans la gamme des longueurs d'onde visibles. La couleur perçue (par la rétine) est alors issue d'un mélange entre les différentes longueurs d'ondes. Il peut s'agir d'une LED, et/ou d'un afficheur à LED(s), avec un spectre d'émission présentant un pic d'émission principal et un autre pic d'émission, par exemple de fluorescence, plus large que le pic principal, et généralement de plus faible intensité. La LED polychromatique émet en particulier selon une première émission (de forte ou de faible intensité) comprise entre 400 et 500 nm et selon une deuxième émission (de forte ou de faible intensité) dans le visible au-delà de 500 nm (cas par exemple de LEDs formées d'au moins un cristal électroluminescent et de phosphore(s) photoluminescent(s)). On peut notamment utiliser comme sources des LEDs blanches fabriquées par exemple à partir d'une puce de cristal semi-conducteur tel que le nitrure de gallium/indium (InGaN) émettant dans le bleu, recouverte d'une résine transparente (telle que silicone ou époxy) contenant des luminophores minéraux (par exemple YAG:Ce), absorbant le bleu et émettant dans le jaune. On peut également utiliser des LEDs à émissions polychromatiques, par exemple formées de trois sources monochromatiques d'intensités réglées de manière indépendante de type « RGB » (avec trois sources : rouge, verte et bleue), etc.

Une ou des sources peuvent également être intégrées dans ou couplées à ou combinées à une ou des structure(s) de type afficheur(s) (par exemple à diodes électroluminescentes dits « à 7 segments » ou à cristaux liquides), bandeau ou écran de commande électronique à touches sensitives et affichage digital (le cas échéant par communication sans fils à l'aide d'une interface), etc

Outre la ou les sources, l'article selon l'invention peut aussi comprendre au moins un guide d'onde destiné à propager la lumière d'une partie à l'autre de l'article (en particulier par réflexion totale interne ou par réflexion métallique), en particulier lorsque les sources sont placées sous le plan de travail, chaque source lumineuse étant alors rattachée au guide concerné et coopérant avec celui-ci en émettant en son sein son rayonnement lumineux afin que le guide le transmette, la ou les sources lumineuses émettant/étant couplées par exemple par la tranche ou chant du guide. Ce guide est avantageusement clair ou transparent, et peut être notamment rapporté (assemblé après avoir été conçu séparément) sous la face inférieure de la plaque. Il peut être organique et/ou plastique (par exemple en polycarbonate ou polyméthacrylate de méthyle PMMA), ou minéral, et est de préférence minéral ; en particulier, il s'agit d'un verre. L'article selon l'invention peut comprendre plusieurs guides dédiés chacun à une ou plusieurs zones d'éclairage, ou un guide unitaire, pourvu le cas échéant d'ouvertures. Le guide peut être solidarisé au substrat par collage et/ou clipsage, ou par encapsulation, etc. L'assemblage du guide peut se faire directement sur le substrat ou sur une autre partie de l'équipement ou d'un support sur lequel est monté le plan de travail, par exemple peut être solidarisé au caisson sur lequel repose le plan de travail. Le guide permet, entre autres, de mieux conduire la lumière jusqu'aux zones d'éclairage voulues et est notamment approprié avec le substrat utilisé selon la présente invention.

Une des sources étant placées sous le plan de travail, le cas échéant associées à au moins un guide d'onde, l'équipement peut également comprendre dans la zone d'éclairage, au moins un moyen d'extraction du rayonnement émis par la ou les sources, par exemple un ou des éléments ou traitements diffusants, en particulier une couche rapportée sur la surface et/ou tout traitement ou texturation différentielle de la surface (local ou sur toute la surface) du guide d'onde ou de la surface d'extraction, comme la gravure laser, l'impression d'émail, l'attaque chimique (acide..) ou mécanique (sablage...), etc. Une surface d'extraction peut le cas échéant être prévue dans l'épaisseur du guide, suivant par exemple une technologie de gravure interne par laser. La géométrie et la rugosité du bord d'un guide d'onde peuvent également être travaillés pour permettre une extraction locale et contrôlée de la lumière. Le ou les moyens d'extraction permettent d'extraire les rayonnements du guide vers la zone d'éclairage voulue. Ils peuvent être combinés le cas échéant avec un autre traitement permettant de cibler les zones d'éclairage, par exemple avec une sérigraphie occultante (masquant certaines zones et empêchant le passage de la lumière) déposée sur une partie d'une face du substrat.

L'équipement peut également comprendre au moins un filtre (couplé (en fonctionnement) à au moins une source (de même qu'à la plaque, la zone colorée obtenue résultant notamment de (l'action/l'effet de) ces trois composants)), de façon à former une zone lumineuse colorée de couleur choisie (la couleur d'une source perçue au travers d'un substrat en vitrocéramique de couleur sombre étant modifiée par rapport à la couleur d'origine de la source par le passage au travers de la plaque), positionné généralement entre la source et la plaque, ce filtre pouvant notamment être combiné (ou solidarisé) à la source et/ou à la plaque et/ou éventuellement à un autre élément intermédiaire.

Par "filtre" on entend un filtre optique (à action sur la transmission de la lumière), en particulier coloré (l'action sur la transmission de la longueur d'onde se faisant en fonction des longueurs d'onde), ce filtre étant en particulier un élément ou matériau, généralement plan, notamment sous forme de film ou couche ou composite, à base d'au moins un matériau organique ou minéral, (semi-)transparent (dans le sens notamment où il est transparent à certaine(s) longueur(s) d'onde du visible et non transparent à/en bloquant/en affectant d'autre(s), ce filtre présentant en outre généralement une transmission lumineuse d'au moins 5% et en particulier d'au moins 30%), en particulier permettant d'absorber et/ou de réfléchir et/ou de réémettre certaines longueurs d'onde du spectre visible. Ce filtre peut être avantageusement un filtre par absorption (l'action sur la transmission de la lumière se faisant par absorption à certaines longueurs d'onde, la lumière absorbée pouvant notamment être convertie en chaleur et/ou émise à d'autres longueurs d'onde), ou peut être également un filtre par réflexion (l'action sur la transmission de la lumière se faisant par réflexion à certaines longueurs d'onde). Le filtre peut être rapporté (fabriqué séparément) et combiné à au moins une source lumineuse et/ou au plan de travail, ou il peut être intégré ou réalisé directement sur ledit plan et/ou ladite source, par exemple sous forme d'une couche imprimée, par exemple par jet d'encre. Le rayonnement émis par la source passe par le filtre correctif afin de produire l'affichage recherché au travers du substrat auquel cet ensemble est combiné. Le filtre peut permettre de former différentes couleurs, par exemple au moins une zone colorée de couleur blanche ou d'une couleur de synthèse obtenue par un mélange à plusieurs longueurs d'onde.

Les filtres peuvent être des polymères transparents colorés, des verres colorés, la coloration se faisant par dépôt ou dans la masse, ou peuvent être des couches déposées sur les sources ou le substrat ou un autre support, etc. On utilise de préférence un ou des filtres par absorption, permettant avantageusement d'obtenir l'effet ou la couleur choisi(e) quel que soit l'angle d'incidence de l'observation, formé par exemple par dépôt (par sérigraphie, par impression jet d'encre ou laser, par spray, par trempage, par application au rouleau, etc) d'un ou plusieurs colorants ou pigments minéraux ou organiques (éventuellement dissous ou dispersés dans un medium, en particulier une résine de type silicone, époxy ou acrylique, ou polyuréthane, une encre à séchage UV, ou une matrice minérale de type sol-gel) en surface du substrat choisi (verrier ou plastique/polymère de type polyéthylène téréphtalate, polycarbonate, acrylate, polyétheréthercétone (PEEK), etc), les colorants ou pigments sélectionnés résistant avantageusement à la chaleur.

On peut également utiliser un ou des filtres agissant par réflexion lumineuse (Cette réflexion étant en particulier contrôlée par des interférences se produisant au sein d'un empilement de couches minces constituées de différents matériaux, une couche mince étant une couche dont l'épaisseur est inférieure à la longueur d'onde de la lumière), notamment des filtres de type dichroïques, à base d'empilements (de couches) interférentiels semi-réfléchissants, etc, réalisés par exemple par dépôt (sous vide) en phase vapeur physique (PVD) ou chimique (CVD) de couches de haut et de bas indices de réfraction en alternance, le substrat sur lequel le dépôt est effectué pouvant être un matériau verrier ou un polymère.

Le ou les filtres sont choisis en fonction le cas échéant de la plaque utilisée, de la couleur recherchée, de la source, et de l'effet recherché (par exemple conservation de la couleur de la source pour une source donnée ou quelle que soit cette source, ou obtention d'une couleur cible différente de la couleur initiale de la source après transmission au travers de l'ensemble plaque/filtre), par combinaison le cas échéant de filtres existants ou par réalisation d'un filtre approprié pour arriver au spectre de transmission voulu en agissant sur différentes variables (concentration de pigments, type de pigments, épaisseur du filtre, etc. dans le cas d'un filtre par absorption, ou nombre de couches, indice de chaque matériau, épaisseur du filtre, dans le cas d'un filtre dichroique, etc.).

Le filtre peut être rapporté/déposé le cas échéant sur la plaque (sur sa face inférieure), notamment par collage, dépôt (d'une couche faisant office de filtre) par impression laser ou jet d'encre, par sérigraphie, par spray, etc, ou peut être fixé entre la source et la plaque, ou être monté sur la source (par dépôt, collage, encapsulation, capuchonnage, etc). Le cas échéant, le filtre peut être inséré entre la source lumineuse et la surface d'injection de la lumière d'un guide d'onde.

La combinaison source/plaque et le cas échéant filtre permet d'obtenir un affichage coloré ou blanc au travers du substrat sombre et/ou sur ledit substrat, avec des effets lumineux particulièrement recherchés en termes de design. L'article peut présenter une ou plusieurs zones lumineuses/d'affichage à usage fonctionnel et/ou décoratif, la ou lesdites zones pouvant être dans toute zone de la plaque (y compris zones de chauffe), et l'on peut avoir plusieurs zones lumineuses/d'affichage différenciées (couleur, niveau de luminance), et/ou chaque zone peut elle même présenter différentes couleurs.

Comme indiqué précédemment, l'équipement selon l'invention comporte également au moins une interface de communication avec au moins un élément du plan (tel que la ou les sources lumineuses et/ou le ou les éléments de chauffage).

Cette interface de communication (homme-machine ou machine-machine notamment) peut être un dispositif permettant notamment de commander ou transmettre les commandes aux éléments de chauffage et/ou aux sources lumineuses, à partir de ou par l'intermédiaire de boutons ou touches de commande intégrées au plan de travail ou déportées sur un élément extérieur avantageusement amovible ou mobile, dans le cas notamment d'une commande par communication sans fil.

De préférence, l'interface permet la communication sans fil avec une unité extérieure au plan de travail (cette unité pouvant faire partie de l'équipement selon l'invention et pouvant elle-même constituer une interface), permettant par exemple l'activation à distance des zones chauffantes et/ou des sources lumineuses et/ou la commande de différentes fonctions (augmentation ou diminution de la puissance ou du temps de chauffe, affichage de données sur la plan de travail, etc), les commandes données par l'unité extérieure étant transmises par l'interface aux composants concernés de l'équipement. L'interface peut également être une interface de commande située au niveau du plan (bandeau de commande) transmettant les commandes par fils ou éventuellement sans fils à d'autres composants du plan ou hors du plan (par exemple aux sources déportées du plan dans le cas d'un éclairage par projection).

L'unité extérieure dans le cas d'une commande à distance peut être par exemple sous forme d'un clavier, d'une tablette ou d'un écran tactile, d'un téléphone mobile, cette unité pouvant être fixe (par exemple fixée sur un mur) ou mobile. Ce mode de réalisation présente notamment l'avantage d'éviter les traces de doigts (inesthétiques et visibles sur les matériaux verriers) sur le plan de travail ou les zones de cuisson. L'activation des commandes à distance permet également de réduire les risques de brûlures en évitant la manipulation des commandes à proximité des zones de cuisson. Dans un soucis de sécurité notamment, la communication sans fil peut être avantageusement prévue pour être de portée limitée (par exemple limitée au volume de la pièce dans laquelle l'équipement se trouve) et/ou munie de sécurités pour éviter l'activation par mégarde par une personne non présente. La communication sans fils s'effectue en particulier par ondes électromagnétiques ou radioélectriques, le cas échéant à l'aide de systèmes de type Bluetooth, WLAN, wifi, etc.

L'interface peut permettre de transmettre différents signaux initiés par contact ou même par mouvement pour activer différents composants comme déjà évoqué (par exemple elle peut convertir un mouvement, détecté par des capteurs par triangulation, ces capteurs étant reliés à cette interface (et en faisant partie le cas échéant), en l'activation d'une fonction (par exemple l'augmentation de la puissance de chauffe, éclairage des zones de chauffe, etc.). Elle peut également permettre le téléchargement et/ou la transmission de données diverses (telles que pages internet, fonds d'écrans, recettes de cuisine, etc.), ces données étant par exemple transmises à des sources lumineuses permettant en particulier leur affichage à la surface du plan de travail.

Au moins une interface est généralement située sur ou sous le plan de travail ou à proximité. L'équipement selon l'invention peut également comprendre plusieurs interfaces, de même type ou différentes, permettant par exemple l'activation de différents éléments, ou l'équipement peut comprendre plusieurs interfaces, fonctionnant le cas échéant différemment (de constitution différente, opérant à différentes fréquences, etc.) pour piloter un même élément (par exemple une zone de chauffe) avec un niveau renforcé de sécurité. Le cas échéant, il peut être prévu notamment une interface permettant de coordonner l'activation des zones de chauffe avec l'activation des sources lumineuses L'interface peut être formée de capteur(s), connecteur(s), élément(s) de commande, tout autre composant électrique ou électronique ou électromagnétique, etc..

Outre l'interface, l'équipement ou le plan de travail peuvent être munis de différents câbles, connecteurs ou autres éléments, notamment électriques contribuant à la transmission de commandes d'une partie à l'autre de l'équipement.

L'équipement, en particulier le plan de travail, selon l'invention peut également comporter divers revêtements fonctionnels et/ou décoratifs, notamment parmi ceux généralement utilisés avec les matériaux verriers concernés, par exemple à base d'émail, de peinture, de couche(s) mince(s) (par exemple métallique(s), diélectrique(s), etc.), etc. Par exemple, l'une des faces du substrat peut comporter une ou des couches ou un ou des motifs en émail, à but décoratif et/ou afin de signaler un ou des éléments (afficheurs, zones de cuisson, etc.), et/ou servant de masquage (pour éviter par exemple la vision directe des sources, ce masquage n'étant cependant pas nécessaire avec les substrats sélectionnés selon l'invention), et/ou pour d'autres fonctions (comme extracteur de lumière ou pour homogénéiser l'éclairage, etc.). En particulier, le plan de travail peut être muni d'une couche fonctionnelle lui conférant une ou des propriétés supplémentaires telles qu'anti-rayure, renforcement mécanique, etc.. Le revêtement peut être effectué par exemple par des procédés tels que la sérigraphie, le dépôt par pulvérisation cathodique, le jet d'encre ou d'émail, etc, le revêtement pouvant être appliqué notamment sur la face apparente ou sur la face opposée, selon le type de revêtement et la fonction recherchée. Par exemple, dans le cas d'un décor par émail, celui-ci est préférentiellement déposé en face supérieure pour des raisons de visibilité notamment, tandis qu'une couche opacifiante en peinture est préférentiellement déposée sur la face opposée non apparente pour une meilleure protection contre l'abrasion notamment, etc.

Comme indiqué précédemment, les décorations (ou au moins une partie d'entre elles) ou affichages du plan de travail peuvent également être obtenus avec avantages par affichage lumineux (plutôt que par dépôt d'un revêtement), voire par projection lumineuse sur le plan formant écran lorsque celui-ci est revêtu d'au moins une couche opacifiante (en particulier d'émail), comme déjà évoqué précédemment.

Ci-après est décrit un procédé de fabrication d'un équipement selon l'invention, en particulier du plan de travail dudit équipement, le plan de travail étant formé d'au moins un substrat en vitrocéramique de surface supérieure à 0.7 m², dans lequel on effectue au moins un cycle de céramisation d'une plaque de verre de surface supérieure à 0.7 m² pour obtenir ledit substrat, et selon lequel on réduit la vitesse de passage d'au moins 25%, de préférence d'au moins 50%, ou on augmente la longueur de l'arche de céramisation ou le temps de séjour dans ladite arche d'au moins 25%, de préférence d'au moins 50%, par rapport respectivement à la vitesse, la longueur ou le temps de séjour optimaux ou usuels pour obtenir un substrat en vitrocéramique de surface inférieure à 0.4 m².

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...). Le procédé peut également comprendre une étape de laminage ou effondrement pour former des reliefs particuliers.

Dans ce procédé, la vitrocéramique suit un cycle de céramisation lui donnant les propriétés recherchées, en particulier un aspect sombre/noir/brun, peu transmissif et peu diffusant.

D'autres détails et caractéristiques avantageuses ressortiront ci-après de la description d'un mode de réalisation non limitatif de l'invention en référence aux dessins annexés dans lesquels :
- La figure 1 représente une vue schématique en perspective d'un équipement selon l'invention;
- La figure 2 représente une vue schématique de dessus d'un équipement similaire (les ustensiles à la surface ou les éléments sous-jacents de meuble n'étant pas représentés);
- la figure 3 représente une vue schématique de côté dans laquelle un pan du meuble (23) a été enlevé pour laisser apparaitre certains composants de l'équipement.

Dans cet exemple l'équipement (1) selon l'invention comprend un meuble (2) formé d'un caisson (4) surmonté d'un plan de travail (5) formé d'au moins un substrat monolithique (6) en vitrocéramique de 2.2 m² de surface. Ce substrat est par exemple une plaque du type de celle commercialisée sous la référence KeraBlack+ par la société Eurokera, cette plaque présentant une face supérieure lisse et une face inférieure munie de picots, et une épaisseur de 4 mm, et présentant une luminosité L* de 0.23, un flou de 0.75 %, une transmission lumineuse T_{L} de 1.34%, et un indicateur d'opacité de 99.27. Ce substrat est par exemple obtenu en procédant comme dans la demande de brevet WO2012156444 mais en réduisant la vitesse de passage dans l'arche de céramisation de 50%.

Alternativement, ce substrat peut être aussi par exemple une plaque de 1.1 m² en vitrocéramique du type de celle commercialisée sous la référence KeraVision par la société Eurokera, cette plaque présentant une face supérieure lisse et une face inférieure lisse, et une épaisseur de 6 mm, et présentant une luminosité L* de 1.08, un flou de 2.17%, une transmission lumineuse T_{L} de 3.69%, et un indicateur d'opacité de 95.69. Ce substrat est par exemple obtenu en procédant comme dans la demande de brevet WO2012001300 mais en réduisant la vitesse de passage dans l'arche de céramisation de 50%.

Le substrat utilisé présente une couleur noire (dans les deux cas précités). Dans les deux cas, le substrat en vitrocéramique obtenu présente une planéité de moins de 2 mm (la planéité obtenue étant entre 2 et 3 mm pour une vitesse réduite de 25% seulement, et étant de plus de 15 mm pour une vitesse inchangée par rapport à celle utilisée dans la demande précitée pour obtenir une plaque de dimensions standards inférieure à 0.4 m²), la planéité recherchée pour de bonnes propriétés optiques et de bonnes propriétés de couplage et rendement thermiques notamment, étant inférieure à 3 mm, de préférence inférieure à 2 mm.

L'équipement comprend en outre dans le présent exemple trois éléments de chauffage (7), par exemple des inducteurs, disposés sous la plaque (6). Ces inducteurs sont dans le cas présent répartis au milieu de la surface de travail, mais pourraient tout aussi bien se trouver localisés à une extrémité du plan.

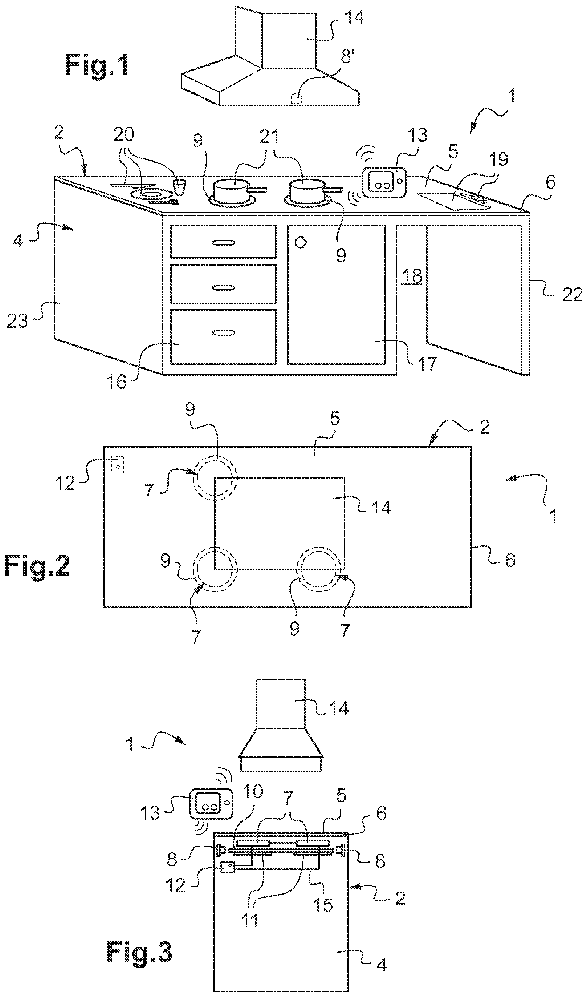

L'équipement comprend également trois sources lumineuses (8), destinées à signaler les emplacements de cuisson, et placées sous le substrat, ces sources étant cachées par le substrat lorsqu'elles sont au repos. Ces sources permettent de signaler les emplacements de cuisson, à l'aide par exemple d'un cercle lumineux de couleur (9) délimitant chaque emplacement (les couleurs pouvant le cas échéant être identiques ou différentes selon les emplacements) et entourant les inducteurs, lorsque ces sources sont activées, voire lorsque les éléments de chauffage sont activés si les sources sont connectées audits éléments par une interface appropriée. Dans le cas présent, les sources sont déportées latéralement par rapport aux zones de cuisson (comme indiqué en figure 2), et la lumière est transmise jusqu'aux zones de chauffage par l'intermédiaire d'un guide d'onde (10). Ce guide optique (10) se présente par exemple sous forme d'une plaque de verre clair borosilicate de 3 mm d'épaisseur et les sources (8) sont formées par exemple d'une pluralité de LEDs portées par une embase logée dans un profilé, les sources se trouvant sur une partie de la tranche du guide hors des zones d'éclairage et des zones de chauffe, l'article comprenant en outre des moyens d'extraction du rayonnement émis par les sources, ces moyens se présentant sous forme de zones émaillées ou sablées 11 situées chacune sous chacune des zones d'éclairage voulues.

L'équipement comprend en outre au moins une interface de communication (12) (cachée par le substrat) avec les éléments de chauffage, et le cas échéant avec les sources lumineuses, cette interface communiquant également sans fils avec une unité extérieure sous forme, par exemple, d'une tablette tactile (13) pour l'activation de différentes zones et fonctions de la plaque ou de l'équipement. L'unité extérieure peut être avantageusement mobile et reposer sur le plan de travail (figure 1) ou servir pour l'activation à distance (figure 3) de différentes zones ou fonctions. Alternativement ou cumulativement, l'interface pourrait également comprendre ou être reliée à un bandeau de commande fixe situé en surface du substrat (2) pour l'activation de différentes zones et fonctions, en particulier du substrat.

Le cas échéant l'équipement peut être associé à ou comprendre également une hotte aspirante (14) surplombant le plan de travail, cette hotte pouvant également intégrer au moins une source lumineuse (8') pour l'éclairage du plan de travail ou la signalisation des zones de cuisson (en particulier dans ce dernier cas lorsque la face supérieure du substrat (6) est revêtue d'un émail opaque).

L'équipement comporte également d'autres éléments, notamment des câbles électriques (15) pour l'activation des éléments chauffants et pour l'activation des sources, et comporte des tiroirs (16) ou des placards (17) aménagés dans le caisson supportant le plan de travail, pour le rangement de divers articles, etc. L'équipement peut également comporter d'autres éléments, par exemple le plan de travail peut comporter un encadrement, le substrat peut être revêtu d'un décor permanent, localisé ou non, par exemple en émail, le caisson peut être plein ou comporter différents évidements (tel que l'évidement (18), ou intégrer d'autres éléments (par exemple un four encastré, etc.). Le plan de travail (5) peut servir pour différents usages, tels que l'écriture (comme symbolisée par le papier et le stylo (19)), le support d'objets (comme symbolisé par la vaisselle (20)) tout en permettant la cuisson d'aliments (comme symbolisé par les récipients de cuisson (21)), etc. Le cas échéant, le caisson peut également être remplacés par des pieds supports (par exemple uniquement les parois 22 et 23, ou quatre pieds au quatre coins, l'équipement sous le plan de travail dans ce cas étant préférentiellement caché par un coffrage localisé de quelques centimètres d'épaisseur sous le substrat) à l'image d'une table.

L'équipement selon l'invention peut notamment être utilisé avec avantages pour réaliser une nouvelle gamme de meubles multi-usages et intéractifs intégrant notamment des zones ou une fonction de cuisson.

## Revendications

1. Equipement mobilier et/ou ménager (1) comprenant :
- au moins un plan de travail (5) formé d'au moins un substrat (6) en matériau verrier monolithique de surface supérieure à 0.7 m², le matériau verrier présentant un indicateur d'opacité supérieur à 93 et inférieur à 100, ledit substrat présentant une luminosité L* inférieure à 10, un flou inférieur à 30 %, et une transmission lumineuse T_{L} inférieure à 10%,
- au moins un élément de chauffage (7),
- au moins une source lumineuse (8), destinée à matérialiser une ou des zones ou un ou des éléments ou affichages du substrat, cette source se trouvant sous le substrat et étant cachée par celui-ci lorsque cette source est au repos,
- au moins une interface de communication (12) entre un homme et au moins une machine choisie parmi une source lumineuse et un élément de chauffage.

2. Equipement (1) selon la revendication 1, **caractérisé en ce que** la surface du substrat (6) en matériau verrier est supérieure à 0.9 m², notamment supérieure à 1m², en particulier d'au moins 2 m², l'épaisseur dudit substrat étant d'au moins 2 mm, notamment d'au moins 2.5 mm, en particulier est de l'ordre de 3 à 30 mm, et avantageusement est inférieure à 15 mm, en particulier est de l'ordre de 3 à 15 mm, notamment de 3 à 10 mm.

3. Equipement (1) selon l'une des revendications 1 ou 2, **caractérisé en ce que** le substrat (6) présente une forme géométrique choisie entre un carré et un rectangle, le substrat présentant une planéité inférieure à 0,1% d'une diagonale du carré du substrat ou du rectangle du substrat, la planéité étant de préférence inférieure à 3 mm, notamment inférieure à 2 mm, en particulier inférieure à 1 mm, voire de l'ordre de zéro.

4. Equipement (1) selon l'une des revendications 1 à 3, **caractérisé en ce que** le substrat (6) est en verre trempé ou en vitrocéramique, et de préférence est en vitrocéramique.

5. Equipement (1) selon l'une des revendications 1 à 4, **caractérisé en ce que** le substrat (6) est d'aspect sombre et présente une luminosité L* inférieure à 5, et un flou inférieur à 28%, et une transmission lumineuse T_{L} inférieure ou égale à 5%, cette transmission lumineuse étant non nulle.

6. Equipement (1) selon l'une des revendications 1 à 5, **caractérisé en ce que** l'équipement (1) comprend comme élément(s) de chauffage (7) un ou plusieurs moyens de chauffage par induction, le ou les éléments de chauffage pouvant être localisés dans une ou plusieurs zones du substrat, ou être uniformément répartis sous le substrat (6), occupant par exemple au moins 25% de la surface du substrat, ou occuper plus de 50 %, notamment plus de 75%, voire plus de 85%, de la surface du substrat.

7. Equipement (1) selon l'une des revendications 1 à 6, **caractérisé en ce que** un ou des emplacements de cuisson sont signalés par, et/ou mis en évidence au moyen de la ou les source(s) lumineuse(s) (8), sur activation de ladite source, ladite source permettant un affichage lumineux par transmission au travers du plan de travail (5).

8. Equipement (1) selon l'une des revendications 1 à 6, **caractérisé en ce que** la face apparente du substrat (6) est revêtue d'un revêtement opacifiant, en particulier d'un émail ou de couches minces, le taux de couverture dudit revêtement opacifiant dans la zone revêtue étant d'au moins 5%, de préférence d'au moins 20%, en particulier d'au moins 45%, voire de 100%, , et le ou les emplacements de cuisson sont signalés par, et/ou mis en évidence au moyen de, au moins une autre source lumineuse (8), sur activation de la ou des autre source, ladite autre source se trouvant du côté de la face apparente du substrat (6) ou du côté où l'affichage est recherché ou doit être vu, et permettant un affichage lumineux par projection sur cette face formant écran.

9. Equipement (1) selon la revendication 8, **caractérisé en ce que** la face apparente du substrat est revêtue d'un émail présentant un taux de pigments supérieur à 2%, en particulier supérieur à 5%, de préférence supérieur à 10%, notamment compris entre 5 et 30%, et/ou d'un émail présentant un indice de réfraction différent de celui du substrat.

10. Equipement (1) selon l'une des revendications 1 à 9, **caractérisé en ce que** la ou les sources lumineuses (8) sont activables par contact sur la surface du plan et/ou sur l'interface (12) et/ou sur une unité extérieure, ou par mouvement de la main.

11. Equipement (1) selon l'une des revendications 1 à 10, **caractérisé en ce que** l'équipement comprend en outre au moins un guide d'onde, la source lumineuse (8) étant rattachée au guide d'onde.

12. Equipement (1) selon l'une des revendications 1 à 11, **caractérisé en ce que** l'équipement comprend au moins un filtre optique de façon à former une zone lumineuse colorée de couleur choisie, ce filtre étant généralement placé entre la source (8) et le substrat et pouvant être solidarisée à la source et/ou au substrat (6), et/ou éventuellement à un autre élément intermédiaire.

13. Equipement (1) selon l'une des revendications 1 à 12, **caractérisé en ce que** l'interface (12) permet la communication sans fil, en particulier avec une unité extérieure au plan de travail, permettant par exemple l'activation à distance des éléments de chauffage (7) et/ou des sources lumineuses (8), l'unité extérieure étant par exemple sous forme d'un clavier, d'une tablette ou d'un écran tactile (13) ou d'un téléphone mobile, cette unité pouvant être fixe ou mobile, la communication sans fil étant par exemple de portée limitée, par exemple limitée au volume de la pièce dans laquelle l'équipement se trouve.

14. Equipement (1) selon l'une des revendications 1 à 13, **caractérisé en ce que** l'équipement comprend une ou plusieurs interfaces (12), de même type ou différentes, permettant de coordonner l'activation des zones de chauffe avec l'activation des sources lumineuses (8).

15. Equipement (1) selon l'une des revendications 1 à 14, **caractérisé en ce que** le plan de travail (5) est monté, en particulier horizontalement, sur au moins un ou des éléments supports, tels qu'un caisson (4) d'un meuble (2) ou un ou des pieds supports, formant ainsi avec lesdits éléments supports une table, un meuble, plein ou non, ou un comptoir.

## Patentansprüche

1. Möbel- und/oder Haushaltseinrichtung (1), umfassend:
- mindestens eine Arbeitsfläche (5), die aus mindestens einem Substrat (6) aus monolithischem Glasmaterial mit einer Oberfläche von mehr als 0,7 m² ausgebildet ist, wobei das Glasmaterial einen Undurchsichtigkeitsindikator von mehr als 93 und weniger als 100 vorweist, wobei das Substrat einen Glanz L* von weniger als 10, eine Unschärfe von weniger als 30 % und eine Lichtdurchlässigkeit T_{L} von weniger als 10 % vorweist,
- mindestens ein Heizelement (7),
- mindestens eine Lichtquelle (8), die dafür bestimmt ist, einen oder mehrere Bereiche oder ein oder mehrere Elemente oder Darstellungen des Substrats zu kennzeichnen, wobei diese Quelle sich unter dem Substrat befindet und durch dieses verdeckt wird, wenn diese Quelle in Ruhe ist,
- mindestens eine Kommunikationsschnittstelle (12) zwischen einem Menschen und mindestens einer Maschine, die aus einer Lichtquelle und einem Heizelement ausgewählt ist.

2. Einrichtung (1) nach Anspruch 1, **dadurch gekennzeichnet, dass** die Oberfläche des Substrats (6) aus Glasmaterial mehr als 0,9 m², besonders mehr als 1 m², insbesondere mindestens 2 m², beträgt, wobei die Dicke des Substrats mindestens 2 mm, besonders mindestens 2,5 mm, beträgt, insbesondere in der Größenordnung von 3 bis 30 mm liegt und vorteilhafterweise weniger als 15 mm beträgt, insbesondere in der Größenordnung von 3 bis 15 mm, besonders in der Größenordnung von 3 bis 10 mm, liegt.

3. Einrichtung (1) nach einem der Ansprüche 1 oder 2,
**dadurch gekennzeichnet, dass** das Substrat (6) eine geometrische Form vorweist, die zwischen einem Quadrat und einem Rechteck ausgewählt wird, wobei das Substrat eine Ebenheit von weniger als 0,1 % einer Diagonalen des Quadrats des Substrats oder des Rechtecks des Substrats vorweist, wobei die Ebenheit vorzugsweise weniger als 3 mm, besonders weniger als 2 mm, insbesondere weniger als 1 mm, beträgt oder sogar in der Größenordnung von null liegt.

4. Einrichtung (1) nach einem der Ansprüche 1 bis 3,
**dadurch gekennzeichnet, dass** das Substrat (6) aus thermisch vorgespanntem Glas oder aus Glaskeramik und vorzugsweise aus Glaskeramik besteht.

5. Einrichtung (1) nach einem der Ansprüche 1 bis 4,
**dadurch gekennzeichnet, dass** das Substrat (6) eine dunkle Erscheinung besitzt und einen Glanz L* von weniger als 5 und eine Unschärfe von weniger als 28 % und eine Lichtdurchlässigkeit T_{L} von weniger als oder gleich 5 % vorweist, wobei diese Lichtdurchlässigkeit ungleich null ist.

6. Einrichtung (1) nach einem der Ansprüche 1 bis 5,
**dadurch gekennzeichnet, dass** die Einrichtung (1) als Heizelement(e) (7) ein oder mehrere Induktionsheizmittel umfasst, wobei das oder die Heizelemente in einem oder mehreren Bereichen des Substrats angeordnet oder unter dem Substrat (6) gleichmäßig verteilt sein können, wobei sie beispielsweise mindestens 25 % der Oberfläche des Substrats einnehmen oder mehr als 50 %, besonders mehr als 75 %, oder sogar mehr als 85 %, der Oberfläche des Substrats einnehmen.

7. Einrichtung (1) nach einem der Ansprüche 1 bis 6,
**dadurch gekennzeichnet, dass** eine oder mehrere Kochstellen durch die eine oder die mehreren Lichtquelle(n) (8) bei Aktivierung der Quelle gekennzeichnet und/oder hervorgehoben werden, wobei die Quelle eine Lichtanzeige durch Durchlässigkeit mittels der Arbeitsfläche (5) ermöglicht.

8. Einrichtung (1) nach einem der Ansprüche 1 bis 6,
**dadurch gekennzeichnet, dass** die sichtbare Seite des Substrats (6) mit einer mattierenden Beschichtung, insbesondere einer Emaille oder Dünnschichten, beschichtet ist, wobei der Bedeckungsgrad der mattierenden Beschichtung in dem beschichteten Bereich mindestens 5 %, vorzugsweise mindestens 20 %, insbesondere mindestens 45 %, oder sogar 100 %, beträgt und die eine oder die mehreren Kochstellen durch mindestens eine weitere Lichtquelle (8) bei der Aktivierung der einen anderen oder den anderen Quellen gekennzeichnet und/oder hervorgehoben werden, wobei die andere Quelle sich auf der Seite der sichtbaren Seite des Substrats (6) oder auf der Seite, an der die Anzeige gesucht wird oder gesehen werden muss, befindet und eine Lichtanzeige durch Projektion auf diese Seite, die einen Bildschirm ausbildet, ermöglicht.

9. Einrichtung (1) nach Anspruch 8, **dadurch gekennzeichnet, dass** die sichtbare Seite des Substrats mit einer Emaille, die einen Pigmentgehalt von mehr als 2 %, insbesondere mehr als 5 %, vorzugsweise mehr als 10 %, besonders zwischen 5 und 30 %, vorweist, und/oder einer Emaille, die einen Brechungsindex vorweist, die sich von dem des Substrats unterscheidet, beschichtet ist.

10. Einrichtung (1) nach einem der Ansprüche 1 bis 9,
**dadurch gekennzeichnet, dass** die eine oder die mehreren Lichtquellen (8) durch Kontakt an der Oberfläche der Ebene und/oder an der Schnittstelle (12) und/oder an einer externen Einheit oder durch Handbewegung aktiviert werden können.

11. Einrichtung (1) nach einem der Ansprüche 1 bis 10,
**dadurch gekennzeichnet, dass** die Einrichtung ferner mindestens einen Wellenleiter umfasst, wobei die Lichtquelle (8) an den Wellenleiter angeschlossen ist.

12. Einrichtung (1) nach einem der Ansprüche 1 bis 11,
**dadurch gekennzeichnet, dass** die Einrichtung mindestens ein optisches Filter, um einen farbigen Lichtbereich der ausgewählten Farbe auszubilden, umfasst, wobei dieses Filter im Allgemeinen zwischen der Quelle (8) und dem Substrat platziert wird und an der Quelle und/oder an dem Substrat (6) und/oder möglicherweise an einem anderen Zwischenelement befestigt werden kann.

13. Einrichtung (1) nach einem der Ansprüche 1 bis 12,
**dadurch gekennzeichnet, dass** die Schnittstelle (12) die drahtlose Kommunikation ermöglicht, insbesondere mit einer externen Einheit der Arbeitsfläche, die zum Beispiel die Aktivierung aus der Entfernung der Heizelemente (7) und/oder der Lichtquellen (8) ermöglicht, wobei die externe Einheit zum Beispiel in Form eines Tastenfeldes, eines Tablets oder eines Touchscreens (13) oder eines Mobiltelefons vorliegt, wobei diese Einheit fest oder bewegbar sein kann, wobei die drahtlose Kommunikation zum Beispiel eine begrenzte Reichweite haben kann, zum Beispiel begrenzt auf das Volumen des Teils, in dem sich die Einrichtung befindet.

14. Einrichtung (1) nach einem der Ansprüche 1 bis 13,
**dadurch gekennzeichnet, dass** die Einrichtung eine oder mehrere Schnittstellen (12) derselben Art oder unterschiedlicher Art umfasst, die das Koordinieren der Aktivierung der Heizbereiche mit der Aktivierung der Lichtquellen (8) ermöglichen.

15. Einrichtung (1) nach einem der Ansprüche 1 bis 14,
**dadurch gekennzeichnet, dass** die Arbeitsfläche (5) insbesondere horizontal auf mindestens einem oder mehreren Stützelementen, wie einem Korpus (4) eines Möbels (2) oder einem oder mehreren Stützfüßen, montiert ist, wobei sie mit den Stützelementen einen Tisch, ein Möbel, massiv oder nicht, oder eine Theke ausbildet.

## Claims

1. Item of furniture and/or appliance (1) comprising:
- at least one worktop (5) formed from at least one substrate (6) made of a monolithic glazing material and of area larger than 0.7 m², the glazing material having an opacity indicator higher than 93 and lower than 100, said substrate having a lightness L* lower than 10, a haze lower than 30% and a light transmission T_{L} lower than 10%;
- at least one heating element (7);
- at least one light source (8), intended to light up one or more zones or one or more elements or displays of the substrate, this source being located under the substrate and being hidden thereby when this source is turned off; and
- at least one interface for communicating (12) between a human and at least a machine selected from a light source and a heating element.

2. Item (1) according to claim 1, **characterized in that** the area of the substrate (6) made of a glazing material is larger than 0.9 m², especially larger than 1 m² and in particular at least 2 m², the thickness of said substrate being at least 2 mm, especially at least 2.5 mm, and in particular about 3 to 30 mm, said thickness advantageously being smaller than 15 mm, in particular about 3 to 15 mm and especially from 3 to 10 mm.

3. Item (1) according to claim 1 or 2, **characterized in that** the substrate (6) has a geometrical shape selected from un square or a rectangle, the substrate having a flatness lower than 0.1% of a diagonal of the square substrate or of the rectangle substrate, and the flatness being preferably lower than 3 mm, especially lower than 2 mm and in particular lower than 1 mm or even of about zero.

4. Item (1) according to anyone of claims 1 to 3, **characterized in that** the substrate (6) is made of tempered glass or glass-ceramic and preferably is made of glass-ceramic.

5. Item (1) according to anyone of claims 1 to 4, **characterized in that** the substrate (6)is dark in appearance, and has a lightness L* lower than 5, a haze lower than 28%, and a light transmission T_{L} lower than or equal to 5%

6. Item (1) according to anyone of claims 1 to 5, **characterized in that** the item (1) comprises by way of heating element(s) (7) one or more inductive heating means, the one or more heating elements possibly being located in one or more zones of the substrate or being uniformly distributed under the substrate (6), for example occupying at least 25% of the area of the substrate, or occupying more than 50%, especially more than 75%, or even more than 85% of the area of the substrate.

7. Item (1) according to anyone of claims 1 to 6, **characterized in that** one or more cooking locations are signaled and/or revealed by means of the at least one light source (8), on activation of said source allowing a luminous display to be formed via the transmission of light through the worktop (5).

8. Item (1) according to anyone of claims 1 to 6, **characterized in that** the visible face of the substrate (6) is coated with an opacifying coating, in particular an enamel or thin films, the degree of coverage of said opacifying coating in the coated zone being at least 5%, preferably at least 20%, in particular at least 45% or even 100%, and the one or more cooking locations are signaled and/or revealed by means of at least one other light source (8), on activation of the one or more other source, said other source being located on the same side as the visible face of the substrate (6), or on the side on which the display is to be formed or from which it is intended to be viewed, and allowing a luminous display to be formed via projection onto this face, which forms a screen.

9. Item (1) according to claim 8, **characterized in that** the visible face of the substrate is coated with an enamel having a pigment content higher than 2%, in particular higher than 5%, preferably higher than 10%, especially comprised between 5 and 30%, and/or having a refractive index different from that of the substrate.

10. Item (1) according to anyone of claims 1 to 9, **characterized in that** the one or more light sources (8) are activatable via contact with the surface of the worktop and/or with the interface (12) and/or with an external system, or via a movement of the hand.

11. Item (1) according to anyone of claims 1 to 10, **characterized in that** the item furthermore comprises at least one waveguide, the light source (8) being attached to the waveguide.

12. Item (1) according to anyone of claims 1 to 11, **characterized in that** the item comprises at least one optical filter so as to form a colored luminous zone of a chosen color, this filter generally being placed between the source and the substrate and possibly being securely fastened to the source (8) and/or to the substrate (6) and/or optionally to another intermediate element.

13. Item (1) according to anyone of claims 1 to 12, **characterized in that** the interface (12) enables wireless communication, in particular with a system external to the worktop, for example allowing heating elements (7) and/or light sources (8) to be activated to be controlled remotely, the external system for example taking the form of a keyboard, a tablet or a touch screen (13) or a cellphone, this system possibly being fixedly mounted or movable, the wireless communication for example being of limited range, for example of range limited to the volume of the room in which the item is located.

14. Item (1) according to anyone of claims 1 to 13, **characterized in that** the item comprises one or more interfaces (12), of the same or different types, or allowing the activation of the heating zones to be coordinated with the activation of the light sources (8).

15. Item (1) according to anyone of claims 1 to 14, **characterized in that** the worktop (5) is mounted, in particular horizontally, on at least one or more than one supporting element, such as a carcass (4) of a unit (2) or one or more supporting legs, thus forming, with said supporting elements, a table, an optionally unapertured unit, or a counter.
